# EUROPEAN PATENT SPECIFICATION

(11) **EP 3 985 241 B1**
(45) Date of publication and mention of the grant of the patent: **29.11.2023**
(21) Application number: 20201873.5
(22) Date of filing: 14.10.2020
(51) Int. Cl.: F02K 7/10, F02K 7/16

(54) **MOTOR AND FUEL-POWERED HYBRID SYSTEM FOR A ROCKET THRUSTER**
MOTOR- UND BRENNSTOFFBETRIEBENES HYBRIDSYSTEM FÜR RAKETENTRIEBWERK
MOTEUR ET SYSTÈME HYBRIDE ALIMENTÉ PAR CARBURANT POUR UN PROPULSEUR DE FUSÉE

(43) Date of publication of application: 20.04.2022
(73) Proprietor: Taiwan Innovative Space, Inc., Chunan Township, Miaoli County 35059 (TW)
(72) Inventor: Chen, Yen-Sen, 35059 Chunan Township, Miaoli County (TW)
(74) Representative: Lang, Christian

(56) References cited:
- EP-A1- 0 362 052
- GB-A- 2 526 611
- US-A1- 2019 234 308

## Description

### BACKGROUND

### Field of the Invention

The present invention relates to a rocket, and more particularly to a motor and fuel-powered hybrid system for a rocket thruster.

### Related Prior Art

Document GB 2 526 611 A discloses a hybrid electric ramjet engine for aircrafts, which includes an air intake port, a diffuser stage, a fuel source, a combustion stage and an exhaust nozzle, wherein fan-type motorized impellors are provided in the diffuser stage that draw air into the engine when the aircraft is stationary or moving at any speed below the maximum cruising speed, wherein said impellors are driven by electric motors and separated by stator vanes, wherein control systems for the impellors, the fuel supply and overall engine control are also provided. The impellors are in operation during the flight of the aircraft and an impellor direction may be reversed to provide reverse thrust. The impellor motors may also act as dynamos in a regenerative braking mode as the craft slows.

At present, the most common rocket thrusters are mainly solid rocket thrusters, liquid rocket thrusters or hybrid rocket thrusters, and because hybrid rocket thrusters have the characteristics of being able to control thrust, relatively low cost, and have higher safety, the number of hybrid rocket thrusters is the largest compared to others.

It is worth mentioning that although hybrid rockets are easier to control their thrust than pure liquid or solid rockets, they still have many inconveniences in use. For example: the use of the mixing of fluid fuel and solid fuel as propulsion fuel from the beginning of lift-off results in the need to reserve a lot of fluid fuel for rocket lift-off on the rocket. Relatively, it is necessary to calculate the possible offset of the rocket after the fluid fuel is reduced, and then adjust the thrust of the rocket thruster according to the calculation results.

The most important thing to note is that since the fluid fuel required for the rocket to lift off from the ground to space must be prepared on the rocket body, in order to prepare enough fluid fuel for lift-off, a lot of space on the rocket body is used to store fluid fuel, resulting in a small amount of equipment that can be installed in the rocket, and thus the weight ratio of the objects that the rocket can carry is extremely low.

In view of this, it is indeed necessary to provide a technical means to solve the problem of extremely low weight ratio of objects that the rocket can carry.

### SUMMARY

One objective of the present invention is to solve the problem of extremely low weight ratio of objects that the rocket can carry.

To achieve the above objective, a motor and fuel-powered hybrid system for a rocket thruster according to claim 1 is provided by the invention, which comprises:
a casing including a first chamber, a second chamber, and a third chamber that are connected in sequence, the first chamber including an air inlet and a first space communicating with each other, the second chamber including a second space communicating with the first space, and the third chamber including a third space communicating with the second space;
an electric motor disposed in the first chamber, and including a central processing system, and a compressor that is power connected to the central processing system; a fluid fuel injector disposed on the casing, controllingly connected to the central processing system, and including an injection head extending into the second chamber, and the injection head being arranged toward the third chamber to spray fluid fuel; and
an igniter disposed in the third chamber and controllingly connected to the central processing system, and being used for igniting fluid fuel;
by such arrangements, there are a first phase, a second phase and a third phase, in the first phase, the central processing system drives the compressor to operate, and the compressor provides kinetic energy, the rocket enters the second phase when raised to a certain height, in the second phase, the central processing system controls the compressor to gradually reduce load, in the third phase, the central processing system drives the fluid fuel injector to inject fluid fuel toward the third chamber provide kinetic energy, and wherein the amounts of fluid fuel that the fluid fuel injector is controlled to inject by the central processing system are the same in the first, second and third phases.

In a preferred embodiment, a nozzle is connected to the third chamber, and the nozzle includes a passage penetrating and communicating with the third space.

In a preferred embodiment, the central processing system includes a processing unit, a power supply, and an electric motor, the processing unit is controllingly connected to the power supply, the power supply is electrically connected to the electric motor, and the electric motor is power connected to the compressor.

In a preferred embodiment, the power supply takes the form of lithium ion batteries or hydrogen fuel cells.

In a preferred embodiment, the compressor is selected from a group consisting of an axial compressor, a centrifugal air compressor, and a combination of the axial compressor and the centrifugal air compressor.

In a preferred embodiment, an interior of the fluid fuel injector is used for storage of hydrocarbon fuel.

In a preferred embodiment, the igniter is an autotransformer.

In a preferred embodiment, a mixing enhancer is disposed in the second chamber, and located between the nozzle and the third space of the third chamber.

Since the first phase of rocket lift-off is mainly achieved by the compressor, and the compressor is driven by the power supply in the central processing system, the weight of the power supply is much smaller than that of the fluid fuel, and in the second phase the load of the compressor is gradually reduced, so that the rocket can also increase the speed to super high speed. In the first, second and third phases, the amounts of fluid fuel that the fluid fuel injector is controlled to inject by the central processing system are the same, wherein the volume of fluid fuel that needs to be stored on the rocket is greatly reduced, so that the rocket can be loaded with more equipment, and the rocket's load ratio is greatly increased.

These together with other objects of the invention, along with the various features of novelty which characterize the invention, are pointed out with particularity in the claims annexed to and forming a part of this disclosure. For a better understanding of the invention, its operating advantages and the specific objects attained by its uses, reference should be had to the accompanying drawings and descriptive matter in which there are illustrated preferred embodiments of the invention.

### BRIEF DESCRIPTION OF THE DRAWINGS

Fig. 1 is a schematic diagram of the structure of the present invention in a preferred embodiment;
Fig. 2 is a graph of the injection conditions of the electric motor and the fluid fuel injector of the present invention in comparison with conventional hybrid rockets.

### DETAILED DESCRIPTION

The present invention will be clearer from the following description when viewed together with the accompanying drawings, which show, for purpose of illustrations only, the preferred embodiment in accordance with the present invention.

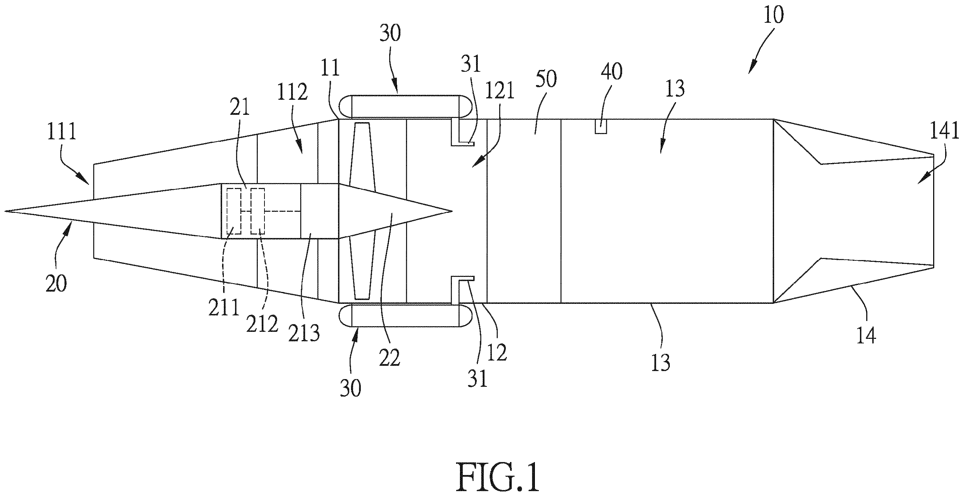

Referring to Fig. 1, the present invention is a motor and fuel-powered hybrid system for rocket thruster, which essentially comprises: a casing 10, the electric motor 20, a fluid fuel injector 30 and an igniter 40.

The casing 10 includes a first chamber 11, a second chamber 12, and a third chamber 13 that are connected in sequence. The first chamber 11 includes an air inlet 111 and a first space 112 communicating with each other, the second chamber 12 includes a second space 121 communicating with the first space 112, and the third chamber 13 includes a third space 131 communicating with the second space 121. In this embodiment, the invention further includes a nozzle 14 connected to the third chamber 13, and the nozzle 14 includes a passage 141 penetrating and communicating with the third space 131.

The electric motor 20 is disposed in the first chamber 11, and includes a central processing system 21, and a compressor 22 that is power connected to the central processing system 21. In this embodiment, the central processing system 21 includes a processing unit 211 (Central Processing Unit/CPU), a power supply 212, and an electric motor 213. The processing unit 211 is controllingly connected to the power supply 212 to control the amount of power supplied from the power supply 212 to the electric motor 213. The power supply 212 is electrically connected to the electric motor 213 and can take the form of lithium ion batteries or hydrogen fuel cells to provide the electric motor 213 energy. The electric motor 213 is power connected to the compressor 22 to drive the compressor 22 to operate, and the compressor 22 can be an axial compressor 22, a centrifugal air compressor 22 or a combination of the two.

The fluid fuel injector 30 is disposed on the casing 10, controllingly connected to the central processing system 21, and includes an injection head 31 extending into the second chamber 12, and the injection head 31 is arranged toward the third chamber 13 to spray fluid fuel. In this embodiment, the interior of the fluid fuel injector 30 is used for storage of hydrocarbon fuel. Hydrocarbon fuel is a bio-fluid fuel that can replace petrochemical diesel and is a substitute for petroleum energy. Hydrocarbon fuel is a fluid fuel that can be produced through a lipid exchange reaction using various lipid compounds (rapeseed oil, cottonseed oil...etc. various vegetable oils) and methanol as raw materials, under the action of a catalyst.

The igniter 40 is disposed in the third chamber 13 and controllingly connected to the central processing system 21 and is used for igniting fluid fuel. In this embodiment, the igniter 40 is an autotransformer, and the central processing system 21 controls the increase or decrease of its voltage, so that the igniter 40 can generate a spark at a specific time point and ignite the fluid fuel in the third chamber 13.

Thereby, there are a first phase, a second phase and a third phase. In the first phase, the central processing system 21 drives the compressor 22 to operate, and the compressor 22 provides kinetic energy. After the rocket is raised to a certain height, it enters the second phase. In the second phase, the central processing system 21 controls the compressor 22 to gradually reduce the load, and in the third phase, the central processing system 21 drives the fluid fuel injector 30 to inject fluid fuel toward the third chamber 13, and the fluid fuel injector 30 provides kinetic energy. It is worth mentioning that in the first, second and third phases, the amounts of fluid fuel that the fluid fuel injector 30 is controlled to inject by the central processing system 21 are the same.

Among them, there is a mixing enhancer 50 disposed in the second chamber 12, and the mixing enhancer 50 is located between the nozzle 14 and the third space 131 of the third chamber 13. When the nozzle 14 injects fluid fuel toward the third chamber 13, the fluid fuel will first pass through the mixing enhancer 50 and then enter the third space 131 of the third chamber 13.

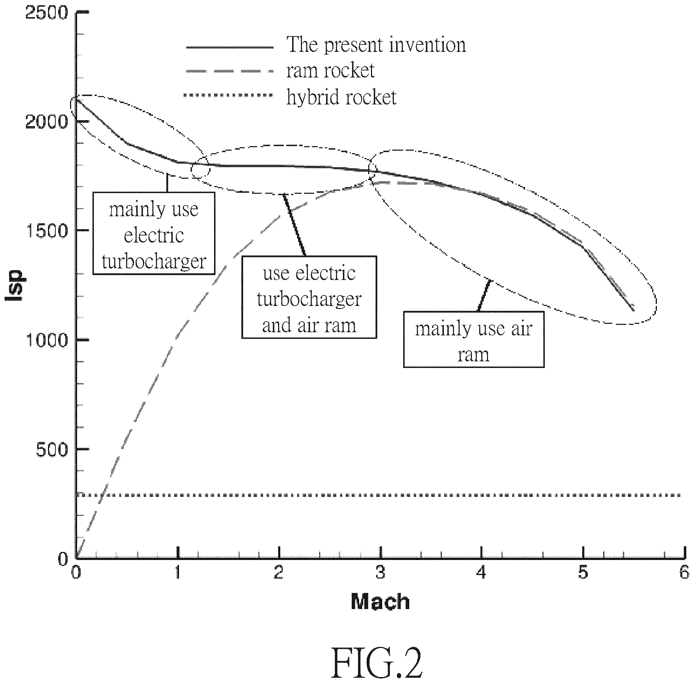

The above is the structural configuration and connection relationship of the present invention in a preferred embodiment. The use of the present invention and the effects it can produce are as follows:
Referring to Figs. 1 and 2, the electric motor and the fuel power mixing system of a rocket thruster of the present invention mainly has three phases in use. In the first phase, the central processing system 21 first controls the compressor 22 to start, and then controls the fluid fuel injector 30 to inject a small amount of hydrocarbon fuel, so that air enters the first space 112 from the air inlet 111 and passes through the compressor 22. When the air passes through the compressor 22, it becomes high pressure and sequentially passes through the second space 121, the third space 131 and the passage 141, thereby allowing the rocket to be propelled into the air mainly by the compressor 22.

After the rocket lifted off through the compressor 22, the central processing system 21 controls the compressor 22 to reduce the load and controls the fluid fuel injector 30 to continuously inject a small amount of hydrocarbon fuel. In the second phase, the power generated by igniting the hydrocarbon fuel is combined with the power generated by the compressor 22 to keep propelling the rocket. Therefore, in the second phase, the combination of the power generated by the ignition of the hydrocarbon fuel and the power generated by the compressor 22 is used to propel the rocket.

In the third phase, as the power of the power supply 212 is gradually exhausted, the central processing system 21 controls the compressor 22 to reduce the load, the fluid fuel injector 30 injects hydrocarbon fuel toward the third chamber 13, and the power generated by ignition and combustion of the hydrocarbon fuel is used to propel the rocket.

Since the first phase of rocket lift-off is mainly achieved by the compressor 22, and the compressor 22 is driven by the power supply 212 in the central processing system 21, the weight of the compressor 22 is much smaller than that of the fluid fuel, and in the second phase the load of the compressor 22 is gradually reduced, so that the rocket can also increase the speed to super high speed. In the third phase, the central processing system 21 controls the reduction of the load of the compressor 22, and mainly uses fluid fuel to provide kinetic energy, therefore, the volume of fluid fuel that needs to be stored on the rocket is greatly reduced, so that the rocket can be loaded with more equipment, and the rocket's load ratio is greatly increased.

While we have shown and described various embodiments in accordance with the present invention, it is clear to those skilled in the art that further embodiments may be made without departing from the scope of the present invention.

## Claims

1. A motor and fuel-powered hybrid system for a rocket thruster, comprising:
a casing (10) including a first chamber (11), a second chamber (12), and a third chamber (13) that are connected in sequence, the first chamber (11) including an air inlet (111) and a first space (112) communicating with each other, the second chamber (12) including a second space (121) communicating with the first space (112), and the third chamber (13) including a third space (131) communicating with the second space (121);
an electric motor (20) disposed in the first chamber (11), and including a central processing system (21), and a compressor (22) that is power connected to the central processing system (21);
a fluid fuel injector (30) disposed on the casing (10), controllingly connected to the central processing system (21), and including an injection head (31) extending into the second chamber (12), and the injection head (31) being arranged toward the third chamber (13) to spray fluid fuel; and
an igniter (40) disposed in the third chamber (13) and controllingly connected to the central processing system (21), and being used for igniting fluid fuel;
there are a first phase, a second phase and a third phase;
wherein in the first phase, the central processing system (21) drives the compressor (22) to operate and the compressor (22) provides kinetic energy;
wherein in the second phase, the central processing system (21) controls the compressor (22) to gradually reduce load;
wherein in the third phase, the central processing system (21) drives the fluid fuel injector (30) to inject fluid fuel toward the third chamber (13) to provide kinetic energy,
the motor and fuel-powered hybrid system for a rocket thruster being **characterized in that**
the rocket enters the second phase when raised to a certain height, and
in each of the first, second and third phases, the fluid fuel injector (30) is controlled to inject fluid fuel, wherein the amounts of fluid fuel that the fluid fuel injector (30) is controlled to inject by the central processing system (21) are the same in the first, second and third phases.

2. The motor and fuel-powered hybrid system for the rocket thruster as claimed in claim 1, **characterized by** further comprising a nozzle (14) connected to the third chamber (13), and the nozzle (14) includes a passage (141) penetrating and communicating with the third space (131).

3. The motor and fuel-powered hybrid system for the rocket thruster as claimed in claim 1, **characterized in that** the central processing system (21) includes a processing unit (211), a power supply (212), and an electric motor (213), the processing unit (211) is controllingly connected to the power supply (212), the power supply (212) is electrically connected to the electric motor (213) of the central processing system (21), and the electric motor (213) of the central processing system (21) is power connected to the compressor (22).

4. The motor and fuel-powered hybrid system for the rocket thruster as claimed in claim 3, **characterized in that** the power supply (212) takes the form of lithium ion batteries or hydrogen fuel cells.

5. The motor and fuel-powered hybrid system for the rocket thruster as claimed in claim 3, **characterized in that** the compressor (22) is selected from a group consisting of an axial compressor (22), a centrifugal air compressor (22), and a combination of the axial compressor (22) and the centrifugal air compressor (22).

6. The motor and fuel-powered hybrid system for the rocket thruster as claimed in claim 1, **characterized in that** an interior of the fluid fuel injector (30) is used for storage of hydrocarbon fuel.

7. The motor and fuel-powered hybrid system for the rocket thruster as claimed in claim 1, **characterized in that** the igniter (40) is an autotransformer.

8. The motor and fuel-powered hybrid system for the rocket thruster as claimed in claim 2, **characterized by** further comprising a mixing enhancer (50) disposed in the second chamber (12) and located between the nozzle (14) and the third space (131) of the third chamber (13).

## Patentansprüche

1. Ein motor- und kraftstoffbetriebenes Hybridsystem für ein Raketentriebwerk, umfassend
ein Gehäuse (10), das eine erste Kammer (11), eine zweite Kammer (12) und eine dritte Kammer (13) enthält, die nacheinander verbunden sind, wobei die erste Kammer (11) einen Lufteinlass (111) und einen ersten Raum (112) enthält, die miteinander in Verbindung stehen, die zweite Kammer (12) einen zweiten Raum (121) enthält, der mit dem ersten Raum (112) in Verbindung steht, und die dritte Kammer (13) einen dritten Raum (131) enthält, der mit dem zweiten Raum (121) in Verbindung steht;
einen Elektromotor (20), der in der ersten Kammer (11) angeordnet ist und ein zentrales Verarbeitungssystem (21) und einen Kompressor (22) enthält, der mit dem zentralen Verarbeitungssystem (21) verbunden ist;
ein Fluid-Kraftstoffinjektor (30), der an dem Gehäuse (10) angeordnet ist, der steuerungsmäßig mit dem zentralen Verarbeitungssystem (21) verbunden ist und der einen Injektionskopf (31) aufweist, der sich in die zweite Kammer (12) erstreckt, wobei der Injektionskopf (31) in Richtung der dritten Kammer (13) angeordnet ist, um flüssigen Kraftstoff zu versprühen; und
einen Zünder (40), der in der dritten Kammer (13) angeordnet ist und der steuerungsmäßig mit dem zentralen Verarbeitungssystem (21) verbunden ist und zum Zünden von flüssigem Kraftstoff verwendet wird;
wobei es eine erste Phase, eine zweite Phase und eine dritte Phase gibt;
wobei in der ersten Phase das zentrale Verarbeitungssystem (21) den Kompressor (22) antreibt, um zu arbeiten, und der Kompressor (22) kinetische Energie bereitstellt;
wobei in der zweiten Phase das zentrale Verarbeitungssystem (21) den Kompressor (22) steuert, um allmählich Last zu verringern;
wobei in der dritten Phase das zentrale Verarbeitungssystem (21) den Fluid-Kraftstoffinjektor (30) ansteuert, um Fluid-Kraftstoff in Richtung der dritten Kammer (13) einzuspritzen, um kinetische Energie bereitzustellen,
wobei das motor- und kraftstoffbetriebene Hybridsystem für ein Raketentriebwerk **dadurch gekennzeichnet ist, dass** die Rakete in die zweite Phase eintritt, wenn sie auf eine bestimmte Höhe angehoben wird, und
in jeder der ersten, zweiten und dritten Phasen, wird der Fluid-Kraftstoffinjektor (30) gesteuert wird, um flüssigen Kraftstoff einzuspritzen, wobei die Mengen an flüssigem Kraftstoff, die der Fluid-Kraftstoffinjektor (30) durch das zentrale Verarbeitungssystem (21) gesteuert wird einzuspritzen in der ersten, zweiten und dritten Phase dieselben sind.

2. Das motor- und kraftstoffbetriebene Hybridsystem für das Raketentriebwerk nach Anspruch 1, **dadurch gekennzeichnet, dass** es ferner eine Düse (14) umfasst, die mit der dritten Kammer (13) verbunden ist, wobei die Düse (14) einen Durchgang (141) aufweist, der den dritten Raum (131) durchdringt und mit diesem in Verbindung steht.

3. Das motor- und kraftstoffbetriebene Hybridsystem für das Raketentriebwerk nach Anspruch 1, **dadurch gekennzeichnet, dass** das zentrale Verarbeitungssystem (21) eine Verarbeitungseinheit (211), eine Stromversorgung (212) und einen Elektromotor (213) umfasst, wobei die Verarbeitungseinheit (211) steuerungsmäßig mit der Stromversorgung (212) verbunden ist, die Stromversorgung (212) elektrisch mit dem Elektromotor (213) des zentralen Verarbeitungssystems (21) verbunden ist, und der Elektromotor (213) des zentralen Verarbeitungssystems (21) mit dem Kompressor (22) leistungsmäßig verbunden ist.

4. Das motor- und kraftstoffbetriebene Hybridsystem für das Raketentriebwerk nach Anspruch 3, **dadurch gekennzeichnet, dass** die Stromversorgung (212) als Lithium-Ionen-Batterien oder Wasserstoff-Brennstoffzellen ausgebildet ist.

5. Das motor- und kraftstoffbetriebene Hybridsystem für das Raketentriebwerk nach Anspruch 3, **dadurch gekennzeichnet, dass** der Kompressor (22) aus einer Gruppe ausgewählt ist, die aus einem Axialkompressor (22), einem Zentrifugalluftkompressor (22) und einer Kombination aus dem Axialkompressor (22) und dem Zentrifugalluftkompressor (22) besteht.

6. Das motor- und kraftstoffbetriebene Hybridsystem für das Raketentriebwerk nach Anspruch 1, **dadurch gekennzeichnet, dass** ein Innenraum des Fluid-Kraftstoffinjektors (30) zur Speicherung von Kohlenwasserstoff-Kraftstoff verwendet wird.

7. Das motor- und kraftstoffbetriebene Hybridsystem für das Raketentriebwerk nach Anspruch 1, **dadurch gekennzeichnet, dass** der Zünder (40) ein Spartransformator ist.

8. Das motor- und kraftstoffbetriebenes Hybridsystem für das Raketentriebwerk nach Anspruch 2, **dadurch gekennzeichnet, dass** es ferner einen Mischverstärker (50) umfasst, der in der zweiten Kammer (12) angeordnet ist und sich zwischen der Düse (14) und dem dritten Raum (131) der dritten Kammer (13) befindet.

## Revendications

1. Le système hybride à moteur électrique et carburant pour un propulseur de fusée, comprenant :
un carter (10) incluant une première chambre (11), une deuxième chambre (12) et une troisième chambre (13) qui sont reliées en séquence, la première chambre (11) incluant une entrée d'air (111) et un premier espace (112) communiquant entre eux, la deuxième chambre (12) incluant un deuxième espace (121) communiquant avec le premier espace (112), et la troisième chambre (13) incluant un troisième espace (131) communiquant avec le deuxième espace (121) ;
un moteur électrique (20) disposé dans la première chambre (11), et incluant un système de traitement central (21) et un compresseur (22) qui est connecté électriquement au système de traitement central (21) ;
un injecteur de combustible liquide (30) disposé sur le carter (10), relié de manière commandable au système de traitement central (21) et incluant une tête d'injection (31) s'étendant dans la seconde chambre (12), et la tête d'injection (31) étant agencé vers la troisième chambre (13) pour pulvériser du combustible liquide ; et
un allumeur (40) disposé dans la troisième chambre (13) et relié de manière commandable au système de traitement central (21), et étant utilisé pour allumer le combustible liquide ;
il existe une première phase, une deuxième phase et une troisième phase ;
dans lequel dans la première phase, le système de traitement central (21) commande le fonctionnement du compresseur (22) et le compresseur (22) fournit de l'énergie cinétique ;
dans lequel, dans la deuxième phase, le système de traitement central (21) commande au compresseur (22) de réduire progressivement la charge ;
dans lequel, dans la troisième phase, le système de traitement central (21) commande à l'injecteur de combustible liquide (30) d'injecter du combustible liquide vers la troisième chambre (13) pour fournir de l'énergie cinétique,
le système hybride à moteur électrique et carburant pour un propulseur de fusée étant **caractérisé en ce que**
la fusée entre dans la deuxième phase lorsqu'elle a atteint une certaine hauteur, et
dans chacune des première, deuxième et troisième phases, l'injecteur de combustible liquide (30) reçoit la commande d'injecter du combustible liquide, dans lequel les quantités de combustible liquide que l'injecteur de combustible liquide (30) doit injecter sur commande du système de traitement central (21) sont les mêmes dans les première, deuxième et troisième phases.

2. Le système hybride à moteur électrique et carburant pour le propulseur de fusée selon la revendication 1, **caractérisé en ce qu'**il comprend en outre une tuyère (14) reliée à la troisième chambre (13), et la tuyère (14) inclut un passage (141) pénétrant dans le troisième espace (131) et communiquant avec celui-ci.

3. Le système hybride à moteur électrique et carburant pour le propulseur de fusée selon la revendication 1, **caractérisé en ce que** le système de traitement central (21) inclut une unité de traitement (211), un bloc d'alimentation (212) et un moteur électrique (213), l'unité de traitement (211) est connectée de manière commandable au bloc d'alimentation (212), le bloc d'alimentation (212) est connecté électriquement au moteur électrique (213) du système de traitement central (21), et le moteur électrique (213) du système de traitement central (21) est connecté électriquement au compresseur (22).

4. Le système hybride à moteur électrique et carburant pour propulseur de fusée selon la revendication 3, **caractérisé en ce que** le bloc d'alimentation (212) prend la forme de batteries lithium-ion ou de piles à combustible à hydrogène.

5. Le système hybride à moteur électrique et carburant pour le propulseur de fusée selon la revendication 3, **caractérisé en ce que** le compresseur (22) est choisi dans un groupe consistant en un compresseur axial (22), un compresseur d'air centrifuge (22) et une combinaison du compresseur axial (22) et du compresseur d'air centrifuge (22).

6. Le système hybride à moteur électrique et carburant pour le propulseur de fusée selon la revendication 1, **caractérisé en ce qu'**un intérieur de l'injecteur de combustible liquide (30) est utilisé pour le stockage de combustible hydrocarboné.

7. Le système hybride à moteur électrique et carburant pour propulseur de fusée selon la revendication 1, **caractérisé en ce que** l'allumeur (40) est un autotransformateur.

8. Le système hybride à moteur électrique et carburant pour le propulseur de fusée selon la revendication 2, **caractérisé en ce qu'**il comprend en outre un activateur de mélange (50) disposé dans la deuxième chambre (12) et situé entre la tuyère (14) et le troisième espace (131) de la troisième chambre (13).
